# EUROPÄISCHE PATENTSCHRIFT

(11) **EP 0 710 538 B1**
(45) Veröffentlichungstag und Bekanntmachung des Hinweises auf die Patenterteilung: **10.06.1998**
(21) Anmeldenummer: 95115014.3
(22) Anmeldetag: 23.09.1995
(51) Int. Cl.: B29C 65/18, B29C 53/50

(54) **Vorrichtung zur Bildung einer Längsnaht eines Folienschlauches**
Device for forming a longitudinal seam of a tubular film
Dispositif pour la formation d'un joint longitudinal d'un film tubulaire

(30) Priorität: 02.11.1994 DE 4439104
(43) Veröffentlichungstag der Anmeldung: 08.05.1996
(73) Patentinhaber: Rovema Verpackungsmaschinen GmbH, 35463 Fernwald (DE)
(72) Erfinder: Keim, Dieter, D-35428 Langgöns (DE); Braun, Harald, D-35305 Grünberg (DE); Schneider, Werner, D-35644 Hohenahr (DE); Baur, Walter, Dr., D-63584 Gründau (DE)

(56) Entgegenhaltungen:
- EP-A- 0 498 764
- CH-A- 683 510
- DE-A- 4 400 590
- GB-A- 2 015 423
- US-A- 3 367 261
- US-A- 4 202 721
- PATENT ABSTRACTS OF JAPAN vol. 008 no. 238 (M-335) ,31.Oktober 1984 & JP-A-59 115817 (AJINOMOTO KK;OTHERS: 01) 4.Juli 1984,

## Beschreibung

Die Erfindung betrifft eine Vorrichtung zur Bildung einer Längsnaht eines Folienschlauches mit einer Formschulter zum Umlegen einer flexiblen Folie um ein Formatrohr einer Transporteinrichtung für den Weitertransport der Folie und des geformten Folienschlauches, sowie einer Einrichtung zur Verschweißung der Längsnaht.

Aus der US-PS 4,202,721 ist eine derartige Vorrichtung gemaß dem einleitenden Teil des Anspruchs 1 bekannt, bei der eine Kunststoffolie mittels zwei gegeneinander gepreßten, die Längsnaht der Folie einklemmenden, entgegengesetzt umlaufenden Siegelbändern verschweißt wird. Die Siegelbänder werden mittels elektrischen Stroms erhitzt. Jeweils ein Rollensystem dient einer Druckaufbringung auf ein Längssiegelband und auf den Längsrand der Folie.

Der Erfindung liegt die Aufgabe zu Grunde, bei einer Vorrichtung mit gegenläufig umlaufenden Siegelbändern die Siegelbänder zu erwärmen und einen konstanten Schweißdruck zu erzeugen.

Gelöst ist die Aufgabe gemäß dem kennzeichnenden Teil des Anspruchs 1. Danach ist an mindestens einem Siegelband an einem geraden Teilstück des Siegelbandes als Mittel zur Druckaufbringung eine über mindestens eine Feder abgefederte Heißsiegelbacke vorgesehen.

Die Erfindung hat den Vorteil, daß ein konstanter Schweißdruck erzeugt wird, da die Heißsiegelbacke entlang des geraden Teilstücks gleichmäßig auf das Heißsiegelband wirkt, und die Feder für einen konstanten Schweißdruck sorgt. Die Erwärmung eines Siegelbandes erfolgt mit einer Heißseigelbacke.

Weitere vorteilhafte Ausgestaltungen der erfindungsgemäßen Vorrichtung werden in den Ansprüchen 2 bis 12 beschrieben.

Die Längsnahtverschweißung eines Folienschlauches erfolgt in zuverlässiger Weise mit einer dafür geeigneten Maschine, wenn analog Anspruch 2 die Vorrichtung Teil einer vertikalen Schlauchbeutelmaschine ist, an derem Formatrohr die Einrichtung zur Verschweißung der Längsnaht vorgesehen ist.

Die erfindungsgemäße Vorrichtung hat den Vorteil, daß eine Längsnahtverschweißung schneller erfolgen kann, wenn gemäß Anspruch 3 beide Siegelbänder erhitzbar sind. Dann kann die Wärmeeinbringung von den beiden gegenüberliegenden Seiten in die Längsschweißzone eingebracht werden. Die Siegelbänder müssen dazu nicht die Temperatur aufweisen, sie von einem einzigen Siegelband aufgebracht werden müßte. Somit kann auch die insgesamt auf der Kontaktfläche zwischen den beiden Folienenden erzeugte Wärme verringert werden, wodurch die aufgeschmolzene Kontaktfläche schneller erstarren kann.

Laufen die beiden Siegelbänder in einer Ebene tangential zu dem Formatrohr um (Anspruch 4), so wird erreicht, daß die Siegelbänder leicht zugänglich sind, und daß mit ihnen eine Flossennaht verschweißt werden kann. Die Tangentialebene wird durch die Normalen der Siegelbänder beschrieben.

Eine Überlappungsnaht kann verschweißt werden, wenn gemäß Anspruch 5 die beiden Siegelbänder derart umlaufen, daß ein Siegelband im Inneren des Formatrohres und ein Siegelband außerhalb des Formatrohres vorgesehen ist. Das im Formatrohr untergebrachte Siegelband benötigt außerhalb des Füllrohres keinen zusätzlichen Raum und führt daher auch zu einer besonders kompakten Bauweise. Durch das Formatrohr kann Produkt in das am Ende des Formatrohrs befindliche Ende des Folienschlauches gefüllt werden, ohne die Funktion des im Formatrohr befindlichen Siegelbandes zu beeinträchtigen, wenn analog Anspruch 6 das im Inneren des Formatrohres angeordnete Siegelband von einem Staubschutz umgeben ist. Dabei kann sich kein Produkt auf dem Staubschutz ablagern, wenn der Staubschutz an seinem oberen Ende lediglich Schrägen aufweist (Anspruch 7). Eine Produktablagerung im Inneren eines Formatrohres hätte mehrere Nachteile. Zum einen würden abgelagerte Produktportionen bei abgewägtem Produkt dazu führen, daß die Dosiergenauigkeit verschlechtert wird. Zum anderen würde es bei einer Produktänderung dazu führen, daß abgelagertes Produkt mit dem neuen Produkt vermischt wird, oder daß die abgelagerte Produktportion beseitigt werden müßte, bevor ein neues Produkt abgepackt wird.

Zur dichten Verschweißung einer Naht ist es erforderlich, außer einer genügenden Erwärmung eines thermoplastischen Kunststoffes auch einen ausreichenden Druck auf den geschmolzenen Kunststoff zu bringen. Dies ist erreicht, da an mindestens einem Siegelband an einem geraden Teilstück des Siegelbandes ein Mittel zur Druckaufbringung auf das Siegelband und auf den Schweißbereich vorgesehen ist. Nur ein gerades Teil des Siegelbandes hat Folienkontakt. Von diesem geraden Teil kann entweder ein längeres Teilstück zur Druckaufbringung genutzt werden, oder lediglich ein relativ kurzes Teilstück an einem das Siegelband umlenkenden Rad. Da als Mittel zur Druckaufbringung eine über mindestens eine Feder abgefederte Backe vorgesehen ist, so ist ein konstante, durch die Kraft der Feder vorgegebene Druckaufbringung entlang der gesamten Backenlänge gewährleistet. Die Backe schleift dabei gegen die Innenseite des umlaufenden Siegelbandes. Da die schleifende Backe als Heißsiegelbacke ausgestaltet, so erfolgen die Druckaufbringung und die Erhitzung des Siegelbandes in kompakter Bauweise mittels einer einzigen Einrichtung.

Das Siegelband kann in einfacher Weise geführt und angetrieben werden, wenn es analog Anspruch 8 um zwei parallel zueinander ausgerichtete Räder läuft. Die Räder können auf ihrer Mantelfläche eine Profilierung zeigen, um das Siegelband zu führen und ein Abrutschen des Siegelbandes vom Rad zu verhindern. Für den Antrieb des Siegelbandes ist es ausreichend, lediglich ein Rad anzutreiben, jedoch ist auch ein Antrieb der beiden Räder eines Siegelbandes sinnvoll, wenn für einen bestimmten Anwendungsfall größere axial wirkende Kräfte für den Folienschlauch benötigt werden. Ein um zwei Räder umlaufendes Siegelband kann auch für eine Druckaufbringung eingesetzt werden, wenn mindestens eine Radachse eines Rades mittels einer Feder abgefedert ist (Anspruch 9). Infolge der mechanischen Spannung des Siegelbandes überträgt sich eine derartige Federkraft auch auf die geraden Abschnitte des umlaufendes Siegelbandes.

Eine Minimalisierung von Kraftdifferenzen an der Längsnaht eines Folienschlauches, welche zu einem problematischen Folienlauf führen können, wird erreicht, wenn gemäß Anspruch 10 von den Rädern der beiden Siegelbänder jeweils ein Rad angetrieben ist, beide Siegelbänder separat von jeweils einem Motor angetrieben werden, und die Siegelbänder mit gleicher Geschwindigkeit angetrieben werden. Die Siegelbänder üben beidseits der beiden miteinander zu verschweißenden Folienbereiche gleiche Kräfte aus, da beidseits eine gleiche Siegelbandeinheit wirkt, und da die Siegelbandeinheiten zuverlässig synchron zueinander angetrieben werden können.

Eine Synchronisierung der beiden Siegelbänder ist erreicht, und der motorische Aufwand für den Antrieb der beiden Siegelbänder wird minimiert, wenn analog Anspruch 11 von den beiden Räder eines Siegelbandes ein Rad ein Antriebsrad ist, welches von einem Motor angetrieben ist, und wenn ein Rad gleichen Durchmessers des anderen Siegelbandes mittels eines achtförmig umlaufenden Treibriemens mit dem Antriebsrad verbunden ist.

Als Motor einen Servomotor vorzusehen (Anspruch 12) hat den Vorteil, daß Drehzahl und Laufdauer in einfacher Weise angesteuert werden können.

Im folgenden wird die Erfindung anhand von Ausführungsbeispiele darstellenden Figuren näher beschrieben. Es zeigt:

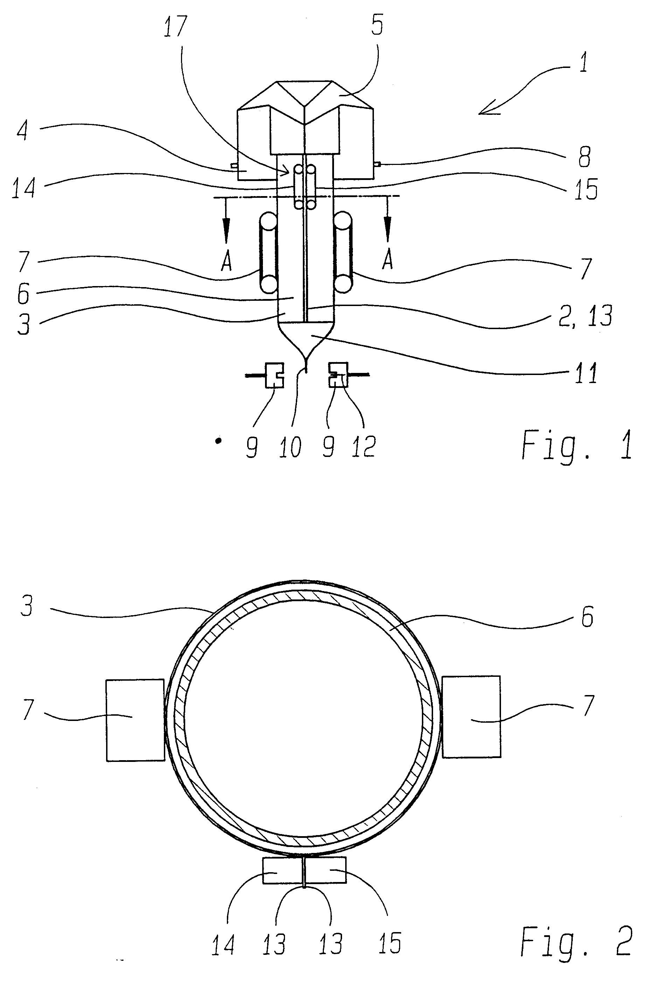

- Figur 1: in einer schematischen Darstellung eine Vorrichtung zur Bildung einer Längsnaht eines Folienschlauches und zur Querverschweißung des Folienschlauches, mit einer Formschulter zum Umlegen einer flexiblen Folie um ein Formatrohr, einer Transporteinrichtung für den Weitertransport der Folie und des geformten Folienschlauches, mit Quersiegelwerkzeugen, sowie mit zwei umlaufenden Siegelbändern zur Verschweißung der Längsnaht des Folienschlauches;
- Figur 2: in einem Horizontalschnitt entlang AA der Figur 1 der Vorrichtung der Figur 1;

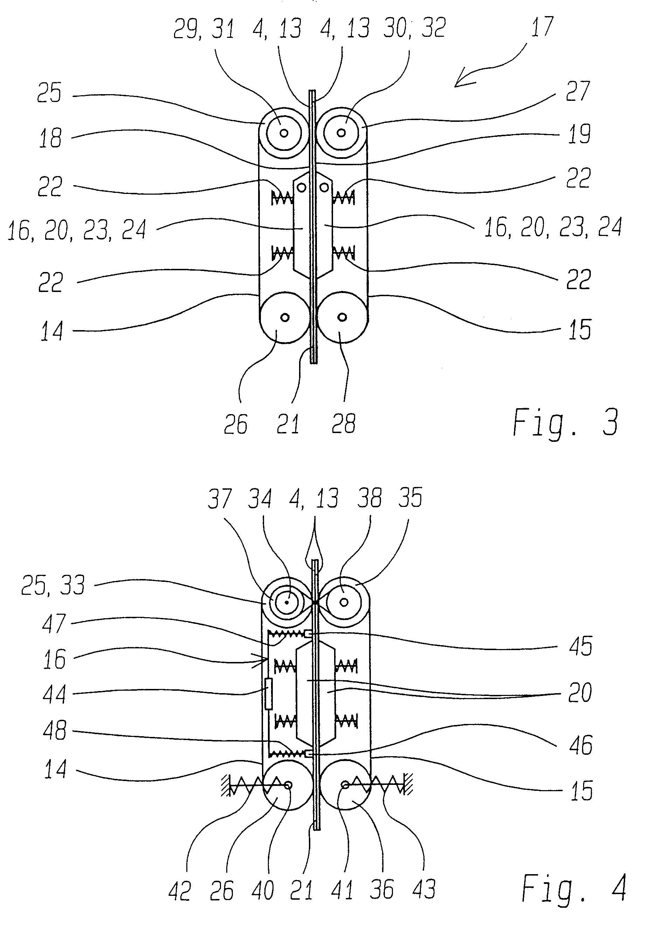

- Figur 3: in einer Seitenansicht zwei umlaufende, Kunststoffolienbereiche verschweißende, separat motorisch angetriebene Siegelbänder, an derem geradem Teilstück zur Druckaufbringung auf das Siegelband und auf den Schweißbereich eine über zwei Federn abgefederte Heißsiegelbacke vorgesehen ist;
- Figur 4: in einer Seitenansicht zwei umlaufende, Kunststoffolienbereiche verschweißende Siegelbänder, mit abgefederten Backen zur Druckaufbringung, abgefederten Radachsen eines Siegelbandes, einer Heizeinrichtung, bestehend aus einer Spannungsquelle und zwei mit den Polen der Spannungsquelle verbundenen, ein Siegelband beruhrenden Schleifkontakten, sowie mit einem achtförmig um ein Antriebsrad und ein weiteres Rad gleichen Durchmessers umlaufendem Treibriemen;

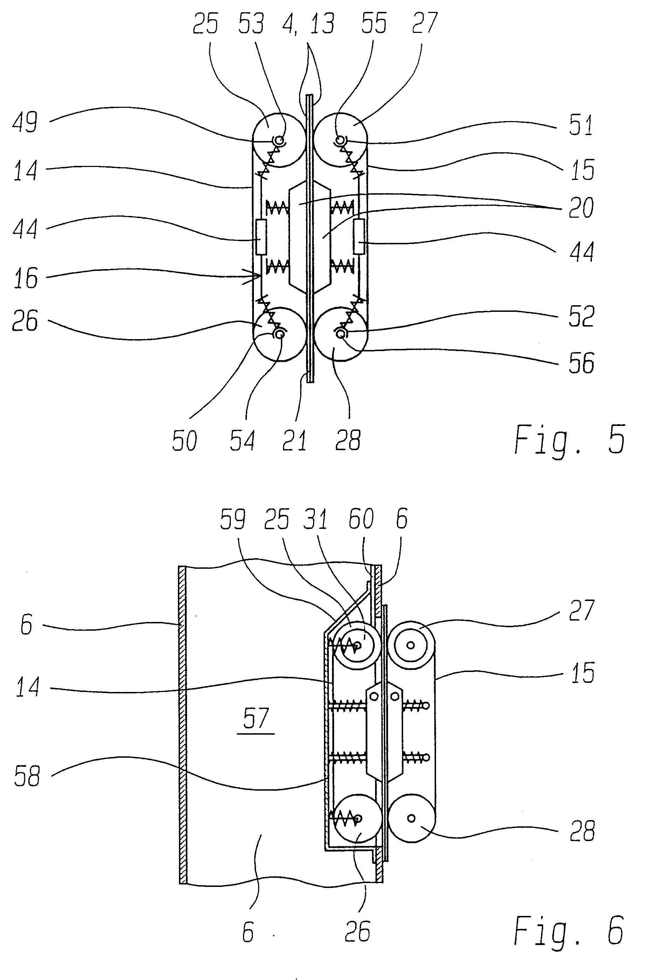

- Figur 5: in einer Seitenansicht zwei umlaufende, Kunststoffolienbereiche verschweißende Siegelbänder, mit Backen zur Druckaufbringung, und jeweils einer Heizeinrichtung pro Siegelband, wobei eine Heizeinrichtung aus einer Spannungsquelle und zwei mit den Polen der Spannungsquelle verbundenen, abgefederten Schleifkontakten besteht, die an den Achsen der beiden Räder schleifen, und wobei die Räder elektrisch leitend sind, sowie
- Figur 6: in einem Vertikalschnitt durch ein Formatrohr die beiden Siegelbänder der Figur 3, mit in einer Ebene radial zu dem Formatrohr umlaufenden Siegelbändern, wobei ein Siegelband außerhalb des Formatrohres vorgesehen ist, und mit einem Staubschutz, der das im Inneren des Formatrohres angeordnete Siegelband umgibt.

Bei einer Vorrichtung 1 zur Bildung der Längsnaht 2 eines Folienschlauches 3 wird eine flexible Folie 4 mittels einer Formschulter 5 um ein Formatrohr 6 gelegt (Figur 1, Figur 2). Die Vorrichtung 1 weist eine Transporteinrichtung 7 für den Weitertransport der auf einer Rolle 8 aufgewickelten Folie 4 und des geformten Folienschlauches 3 auf. Zur Erzeugung von Beutelquernähten sind Quersiegelwerkzeuge 9 vorgesehen, die sowohl Kopf- als auch Bodennähte 10 verschweißen und die erzeugten, durch das Formatrohr 6 gefüllten Beutel 11 mittels eines Messers 12 vom Folienschlauch 3 abtrennen. Zur Verschweißung der Längsnaht 2 des Folienschlauches 3 sind zwei gegeneinander gepreßte, die beiden Längsränder 13 der Folie 4 einklemmende, entgegengesetzt umlaufende Siegelbänder 14, 15 vorgesehen. Beide Siegelbänder laufen in einer Ebene tangential zu dem Formatrohr 6 um (Figur 2) und sind mittels jeweils einer Heizeinrichtung 16 bezüglich ihrer Einrichtung 17 zur Verschweißung der Längsnaht 2 ausgestaltet (Figur 3).

An geraden Teilstücken 18, 19 der Siegelbänder 14, 15 sind Mittel 20 zur Druckaufbringung auf die Siegelbänder 14, 15 und auf den Schweißbereich 21 vorgesehen. Die Mittel 20 zur Druckaufbringung sind mittels Federn 22 abgefederte, als Heißsiegelbacken 23 ausgestaltete Backen 24. Jeweils ein Siegelband 14, 15 läuft um zwei parallel zueinander ausgerichtete Räder 25, 26, 27, 28 der beiden Siegelbänder 14, 15 ist jeweils ein Rad 25, 27 von einem Motor 29, 30 angetrieben. Als Motor 29, 30 ist jeweils ein Servomotor 31, 32 vorgesehen. Die Servomotoren laufen entgegengesetzt um und laufen stets mit der gleichen Drehzahl, die jedoch veränderbar ist.

In einem weiteren Ausführungsbeispiel (Figur 4) ist von den beiden Rädern 25, 26 eines Siegelbandes 14 ein Rad 25 ein Antriebsrad 33, welches von einem Motor 34 angetrieben ist. Ein Rad 35 des anderen Siegelbandes 15 mit gleichen Druchmesser wie das Rad 25 ist über gleichgroße Rollen 37, 38, welche starr mit den Rädern 25, 35 verbunden sind, mit dem Rad 25 gekoppelt. Dazu ist das Rad 35 mittels eines achtförmigen umlaufenden Treibriemens 39 mit dem als Antriebsrad 39 fungierenden Rad 25 verbunden. Somit werden die Räder 25, 35 mit gleicher Drehzahl betrieben, die Räder 25,35 haben jedoch entgegengesetzte Umlaufrichtungen.

Jeweils eine Radachse 40, 41 eines Rades 26, 36 ist mittels einer Feder 42, 43 abgefedert.

Die Heizeinrichtung 16 besteht aus einer Spannungsquelle 44 und zwei mit den Polen der Spannungsquelle 44 verbundenen, das Siegelband 14 innen berührenden Schleifkontakten 45, 46. Die Schleifkontakte 45, 46 werden mittels Federn 47, 48 gegen das Siegelband 14 gedrückt. Es kommt ein Stromfluß durch das Siegelband 14 zustande, wobei das Siegelband 14 erhitzt wird.

In einem weiteren Ausführungsbeispiel (Figur 5) besteht die Heizeinrichtung 16 aus einer Spannungsquelle 44 und zwei mit den Polen der Spannungsquelle 44 verbundenen, gebogenen Schleifkontakten 49, 50, 51, 52. Die Schleifkontakte 49, 50, 51, 52 schleifen an den Radachsen 53, 54, 55, 56 der elektrisch leitenden Räder 25, 26, 27, 28. Bei diesem Ausführungsbeispiel werden beide Siegelbänder 14, 15 elektrisch beheizt.

Im letzten Ausführungsbeispiel (Figur 6) laufen die beiden Siegelbänder 14, 15 in einer Ebene radial zu dem Formatrohr 6 um. Ein Siegelband 14 ist dabei im Inneren 57 des Formatrohres 6 vorgesehen. Das im Inneren 57 des Formatrohres 6 angeordnete Siegelband 14 ist von einem Staubschutz 58 umgeben. Der Staubschutz 58 weist an seinem oberen Ende eine Schräge 59 auf, so daß sich kein Füllgut, welches durch das Formatrohr 6 geschüttet wird, auf dem Staubschutz 58 ablagern kann. Durch den Versorgungskanal 60 werden die Versorgungsleitungen für den Servomotor 31 des Rades 25 geführt.

## Patentansprüche

1. Vorrichtung zur Bildung einer Längsnaht (2) eines Folienschlauches (3) mit einer Formschulter (5) zum Umlegen einer flexiblen Folie(4) um ein Formatrohr (6), einer Transporteinrichtung (7) für den Weitertransport der Folie (4) und des geformten Folienschlauches (3), einer Einrichtung (17) zur Verschweißung der Längsnaht (2), wobei die Einrichtung (17) zur Verschweißung der Längsnaht (2) aus zwei gegeneinander gepreßten, die beiden Längsränder (13) der Folie (4) einklemmenden entgegengesetzt umlaufenden Siegelbändern (14, 15) besteht, von denen ein Siegelband (14, 15) mittels einer Heizeinrichtung (16) erhitzbar ist, und wobei an mindestens einem Siegelband (14, 15) an einem geraden Teilstück (18, 19) des Siegelbandes (14, 15) ein Mittel (20) zur Druckaufbringung auf das Siegelband (14, 15) und auf einem Schweißbereich (21) vorgesehen ist, dadurch gekennzeichnet, daß das Mittel (20) zur Druckaufbringung eine über mindestens eine Feder (22) abgefederte Heißsiegelbacke (23) ist.

2. Vorrichtung nach Anspruch 1, dadurch gekennzeichnet, daß die Vorrichtung Teil einer vertikalen Schlauchbeutelmaschine ist, an derem Formatrohr (6) die Einrichtung (17) zur Verschweißung der Längsnaht vorgesehen ist.

3. Vorrichtung nach Anspruch 1 oder Anspruch 2, dadurch gekennzeichnet, daß beide Siegelbänder (14, 15) mittels jeweils einer Heizeinrichtung (16) erhitzbar sind.

4. Vorrichtung nach Anspruch 1 oder Anspruch 2, dadurch gekennzeichnet, daß die beiden Siegelbänder (14, 15) in einer Tangentialebene des Formatrohrs (6) umlaufen.

5. Vorrichtung nach Anspruch 1 oder Anspruch 2, dadurch gekennzeichnet, daß die Siegelbänder (14, 15) derart umlaufen, daß ein Siegelband (14) im Inneren (57) des Formatrohres (6) und ein Siegelband (15) außerhalb des Formatrohres (6) vorgesehen ist.

6. Vorrichtung nach Anspruch 2 und Anspruch 5, dadurch gekennzeichnet, daß das im Inneren (57) des Formatrohres (6) angeordnete Siegelband (14) von einem Staubschutz (58) umgeben ist.

7. Vorrichtung nach Anspruch 6, dadurch gekennzeichnet, daß der Staubschutz (58) an seinem oberen Ende lediglich Schrägen (59) aufweist.

8. Vorrichtung nach Anspruch 1 oder Anspruch 2, dadurch gekennzeichnet, daß das Siegelband (14, 15) um zwei parallel zueinander ausgerichtete Räder (25, 26, 27, 28) läuft.

9. Vorrichtung nach Anspruch 8 dadurch gekennzeichnet, daß mindestens eine Radachse (40, 41) eines Rades (26, 36) mittels einer Feder (42, 43) abgefedert ist.

10. Vorrichtung nach Anspruch 8, dadurch gekennzeichnet, daß von den Rädern (25, 26, 27, 28) der beiden Siegelbänder (14, 15) jeweils ein Rad (25, 27) angetrieben ist, worüber beide Siegelbänder (14, 15) separat von jeweils einem Motor (29, 30) angetrieben werden, und daß die Siegelbänder (14, 15) mit gleicher Geschwindigkeit angetrieben werden.

11. Vorrichtung nach Anspruch 8, dadurch gekennzeichnet, daß von den beiden Rädern (25, 26) eines Siegelbandes (14) ein Rad (25) ein Antriebsrad (33) ist, welches von einem Motor (34) angetrieben ist, und daß ein Rad (35) gleichen Durchmessers des anderen Siegelbandes (15) mittels eines achtförmig umlaufenden Treibriemens (39) mit dem Antriebsrad (33) verbunden ist.

12. Vorrichtung nach Anspruch 10 oder Anspruch 11, dadurch gekennzeichnet, daß als Motor (29, 30) ein Servomotor (31, 32) vorgesehen ist.

## Claims

1. A device for forming a longitudinal seam (2) in a tubular film (3) with a shaping shoulder (5) for laying a flexible film (4) around a size tube (6), a conveying device (7) for the further transportation of the film (4) and the shaped tubular film (3), a device (17) for welding the longitudinal seam (2), the device (17) for welding the longitudinal seam (2) comprising two sealing bands (14, 15) which are pressed against each other and grip the two longitudinal edges (13) of the film (4) and which circulate in opposite directions and one sealing band (14, 15) of which can be heated by means of a heating device (16), and a means (20) for applying pressure to the sealing band (14, 15) and to a welding area (21) being provided on at least one sealing band (14, 15) on a straight portion (18, 19) of the sealing band (14, 15), **characterized in that** the means (20) for applying pressure is a heat-sealing jaw (23) sprung by at least one spring (22).

2. A device according to Claim 1, **characterized in that** the device is part of a vertical bag-producing machine, on the size tube (6) of which the device (17) for welding the longitudinal seam is provided.

3. A device according to Claim 1 or Claim 2, **characterized in that** the two sealing bands (14, 15) are each heatable by means of one respective heating device (16).

4. A device according to Claim 1 or Claim 2, **characterized in that** the two sealing bands (14, 15) circulate in a tangential plane of the size tube (6).

5. A device according to Claim 1 or Claim 2, **characterized in that** the sealing bands (14, 15) circulate in such a way that one sealing band (14) is provided in the interior (57) of the size tube (6) and one sealing band (15) is provided outside the size tube (6).

6. A device according to Claim 2 and Claim 5, **characterized in that** the sealing band (14) arranged in the interior (57) of the size tube (6) is surrounded by a dust screen (58).

7. A device according to Claim 6, **characterized in that** the dust screen (58) is provided merely with inclined portions (59) at its upper end.

8. A device according to Claim 1 or Claim 2, **characterized in that** the sealing band (14, 15) circulates around two wheels (25, 26, 27, 28) arranged parallel to one another.

9. A device according to Claim 8, **characterized in that** at least one axle (40, 41) of one wheel (26, 36) is sprung by means of a spring (42, 43).

10. A device according to Claim 8, **characterized in that** one respective wheel (25, 27) of the wheels (25, 26, 27, 28) of the two sealing bands (14, 15) is driven, the two sealing bands (14, 15) being driven separately by one respective motor (29, 30) in each case by way of the said wheel (25, 27), and the sealing bands (14, 15) are driven at the same speed.

11. A device according to Claim 8, **characterized in that** one wheel (25) of the two wheels (25, 26) of a sealing band (14) is a driving wheel (33) which is driven by a motor (34), and one wheel (35) of the same diameter of the other sealing band (15) is connected to the driving wheel (33) by means of a driving belt (39) circulating in the form of a figure of eight.

12. A device according to Claim 10 or Claim 11, **characterized in that** a servomotor (31, 32) is provided as the motor (29, 30).

## Revendications

1. Dispositif de formation d'un cordon longitudinal (2) d'un tuyau en feuille (3), avec un épaulement de formage (5) conçu pour passer une feuille flexible (4) autour d'un tube de formatage (6), avec un dispositif de transport (7) destiné a assurer la continuation du transport de la feuille (4) et du tuyau en feuille (3) ayant été formé, un dispositif (17) de soudage du cordon longitudinal (2), le dispositif (17), conçu pour souder le cordon longitudinal (2), étant constitué de deux bandes de scellage (14, 15) pressées l'une contre l'autre, circulant à contre-sens et enserrant les deux bords longitudinaux (13) de la feuille (4), bandes dont une bande de scellage (14, 15) est susceptible d'être chauffée au moyen d'un dispositif de chauffage (16), et sur au moins une bande de scellage (14, 15) étant prévue, sur un tronçon partiel (18, 19) rectiligne de la bande de scellage (14, 15), un moyen (20) conçu pour appliquer une pression sur la bande de scellage (14, 15) et sur une zone de soudage (21), caractérisé en ce que le moyen (20) est une mâchoire de scellage à chaud (23) suspendue élastiquement sur au moins un ressort (22), pour appliquer une pression.

2. Dispositif selon la revendication 1, caractérisé en ce que le dispositif fait partie d'une machine de fabrication de sachets à partir d'un tuyau, à défilement vertical du produit, sur le tube de formatage (6) de laquelle est prévu le dispositif (17) destiné à souder le cordon longitudinal.

3. Dispositif selon la revendication 1 ou 2, caractérisé en ce que les bandes de scellage (14, 15) sont chacune susceptibles d'être chauffées au moyen d'un dispositif de chauffage (16).

4. Dispositif selon la revendication 1 ou 2, caractérisé en ce que les deux bandes de scellage (14,15) défilent dans un plan tangentiel du tube de formatage (6).

5. Dispositif selon la revendication 1 ou 2, caractérisé en ce que les bandes de scellage (14, 15) défilent de manière qu'une bande de scellage (14) soit prévue à l'intérieur (57) du tube de formatage (6) et une bande de scellage (15) soit prévue à l'extérieur du tube de formatage (6).

6. Dispositif selon les revendications 2 et 5, caractérisé en ce que la bande de scellage (14) disposée à l'intérieur (57) du tube de formatage (6) est entourée par une protection anti-poussière (58).

7. Dispositif selon la revendication 6, caractérisé en ce que la protection anti-poussière (58) présente des pans obliques (59) seulement sur son extrémité supérieure.

8. Dispositif selon la revendication 1 ou 2, caractérisé en ce que la bande de scellage (14, 15) défile autour de deux roues (25, 26, 27, 28) orientées parallèlement l'une à l'autre.

9. Dispositif selon la revendication 8, caractérisé en ce qu'au moins un axe de roue (40, 41) d'une roue (26, 36) est suspendu élastiquement au moyen d'un ressort (42, 43).

10. Dispositif selon la revendication 8, caractérisé en ce que, parmi les roues (25, 26, 27, 28) des deux bandes de scellage (14, 15), une roue (25, 27) est entraînée, les deux bandes de scellage (14, 15) passant au-dessus étant entraînées séparément par un moteur respectif (29, 30), et en ce que les bandes de scellage (14, 15) sont entraînées à la même vitesse.

11. Dispositif selon la revendication 8, caractérisé en ce que, parmi les deux roues (25, 26) d'une bande de scellage (14), une roue (25) est une roue d'entraînement (33), qui est entraînée par un moteur (34), et en ce qu'une roue (35) de même diamètre de l'autre bande de scellage (15) est reliée à la roue d'entraînement (33), au moyen d'une courroie de transmission (39) circulant en suivant une trajectoire en forme de huit.

12. Dispositif selon la revendication 10 ou 11, caractérisé en ce qu'est prévu comme moteur (29, 30) un servo-moteur (31, 32).
